Europäisches Patentamt

European Patent Office

Office européen des brevets

(11) Publication number: **0 506 250 A1**

# EUROPEAN PATENT APPLICATION

(21) Application number: **92302046.5**

(51) Int. Cl.⁵: **A23G  3/30**

(22) Date of filing: **11.03.92**

(30) Priority: **28.03.91 US 676911**

(43) Date of publication of application:
**30.09.92 Bulletin  92/40**

(84) Designated Contracting States:
**DE DK ES FR GB NL**

(71) Applicant: **WM. WRIGLEY JR. COMPANY**
**410 North Michigan Avenue**
**Chicago Illinois 60611(US)**

(72) Inventor: **Chapdelaine, Albert H.**
**1593 Marquette Avenue**
**Naperville, Illinois 60619(US)**
Inventor: **McGrew, Gordon N.**
**2505 Ridge**
**Evanston, Illinois 60202(US)**
Inventor: **Witkewitz, David**
**7007 West 88th Place**
**Bridgeview, Illinois 60455(US)**
Inventor: **Russell, Michael P.**
**4541 South Albany**
**Chicago, Illinois 60632(US)**
Inventor: **Kures, Vasek J.**
**8305 Pleasant View Road**
**Willow Springs, Illinois 60480(US)**
Inventor: **Difalco, Mario**
**2354 North Cleveland Avenue**
**Chicago, Illinois 60614(US)**

(74) Representative: **Baverstock, Michael George**
**Douglas et al**
**BOULT, WADE & TENNANT 27 Furnival Street**
**London, EC4A 1PO(GB)**

(54) **Sugarless chewing gum containing free water.**

(57) A method is disclosed for preparing a sugarless chewing gum using free water as an ingredient in the gum formulation. A sugarless chewing gum composition containing free water is also provided.

The present invention relates to a sugarless chewing gum. More particularly, the present invention relates to a method of preparing a sugarless chewing gum that includes adding free water as an ingredient in the gum formulation.

The presence of water in sugarless chewing gum has previously been associated with numerous problems. These problems include degradation of sweeteners and staling. It is also known that sugarless chewing gums having too high water or moisture content crystallize and become crumbly when the moisture dries out of the gum.

Typically, sugarless chewing gum formulations have contained a sorbitol solution as a source of water. Further experimentation has shown that hydrogenated starch hydrolysate syrups such as Lycasin® can be used as a source of water to improve flexibility of the gum. Alternatively, sugarless chewing gum may be produced from an anhydrous formulation, i.e., one containing no moisture-laden ingredients. Instead of the moisture-laden ingredients, the anhydrous gum formulation may contain a relatively high glycerin level which provides for good stability under certain storage conditions. Although moisture-bearing ingredients such as Lycasin® or sorbitol solution may provide an adequate source of water in gum, there are drawbacks to their use including some of the problems discussed above.

In accordance with one embodiment of the present invention, there is provided a method of preparing a sugarless chewing gum using free water as an ingredient in the chewing gum formulation.

Another embodiment of the present invention is a sugarless chewing gum composition that includes gum base, softener, sweetener, and free water.

The present invention is advantageous in that it provides a relatively simple method for producing a sugarless chewing gum having quality physical characteristics and shelf-life stability. Furthermore, the addition of free water is cost-effective in the manufacture of sugarless chewing gum. Since the water added to the gum formulation is extremely low cost and replaces otherwise costly ingredients, there are potentially great economic savings associated with this method. The present invention can also be carried out in a short time and does not require expensive equipment.

It should be noted that the term "free water" as used herein is intended to refer to any potable water of satisfactory taste-quality, including but not limited to, distilled water and tap water. It should be further noted that all percent values ("%") represent weight percent.

The above-described advantages of the present invention, as well as others, will become apparent from the following description which discloses preferred methods of the present invention.

In a presently preferred embodiment, there is provided a method of preparing a sugarless chewing gum that involves adding free water as an ingredient to the gum formulation. Preferably, the free water is added to an otherwise relatively anhydrous sugarless chewing gum formulation. The formulation contemplated is preferably one with a formulated moisture level of less than 2.0%, not counting the free water added to the gum formulation. Most preferably, the sugarless chewing gum has a formulated moisture level of less than 1.0%, not counting the free water added.

The free water utilized in the present invention is preferably distilled water. However, tap water of satisfactory taste-quality may also be used. The quantity of free water added to the gum formulation may vary from about 0.2% to about 3.0% and preferably, from about 0.4% to about 1.5%. Most preferably, the amount of free water added is about 0.5% to about 1.0%.

The free water is added to the gum formulation during mixing of the gum ingredients. Preferably, the free water is added to the gum formulation after essentially all of the bulk sweetener has been incorporated into the molten gum base. Adding the free water in this manner during mixing appears to reduce the incidence of bulk sweetener spots or lumps in the finished gum product. Alternatively, the free water, along with the glycerin ingredient, may be added to the molten gum base early in the mixing. Mixing those ingredients, before the addition of any bulk sweetener, may help avoid bulking agent spots or lumps.

Although the mechanism by which free water acts in the gum formulation is not known, it is believed that the free water may improve overall physical characteristics of the sugarless chewing gum upon storage and reduce oxidation of peppermint flavoring in the gum. Further, it is believed that addition of free water in the manner described above may reduce degradation of dipeptide sweeteners.

In general, a chewing gum comprises a water-soluble bulk portion, a water-insoluble chewable gum base portion and typically, water-insoluble flavor ingredients. The water-soluble bulk portion dissipates with a portion of the flavor over time during chewing. The gum base portion is retained in the mouth throughout the chew.

The insoluble gum base generally comprises elastomers, resins, fats and oils, waxes, softeners, and inorganic fillers. The insoluble gum base constitutes between about 5% to about 95% of the gum, and more preferably, about 20% to about 30%.

The gum base typically also includes a filler component. The filler component may be calcium carbonate, magnesium carbonate, talc, dicalcium phosphate, and the like. The filler may constitute between about 5% to about 60% of the gum base. Preferably, the filler comprises about 5% to 50% of the chewing gum base. The gum base also contains softeners, including glycerol monostearate and glycerol triacetate. Further, gum bases may also contain additional ingredients such as antioxidants, colors, and emulsifiers. The present invention is particularly suitable for use with a non-tack or reduced tack base, however, any commercially acceptable gum base is contemplated.

The water-soluble portion of chewing gum may comprise softeners, sweeteners, and flavors and combinations thereof. The softeners are added to the chewing gum to optimize the chewing ability and mouth feel of the gum. Softeners, also known in the art as plasticizers, generally constitute about 0.1% to about 15% of the chewing gum. Softeners contemplated by the present invention include glycerin, lecithin, and combinations thereof. Aqueous sweetener solutions such as those containing sorbitol and hydrogenated starch hydrolysates, and combinations thereof, may be used as softeners and binding agents in gum.

Sweeteners contemplated for use in the present invention are preferably sugarless components. Sugarless sweeteners generally include components with sweetening characteristics but are devoid of the commonly known sugars and comprise, but are not limited to, sugar alcohols such as sorbitol, mannitol, xylitol, hydrogenated starch hydrolysates, maltitol, and the like, alone or in any combination. Also contemplated for direct addition to the gum are high intensity sweeteners such as aspartame, Sucralose®, cyclamate, acesulfame-K, dihydrochalones, glycyrrhizin, alitame, and saccharin, and the food acceptable salts thereof. Those persons skilled in the art will recognize a sweetener may be present in a chewing gum in whole or in part as a water-soluble bulking agent, and that the softener may be combined with a sweetener such as an aqueous sweetener solution.

A flavoring agent may be present in the chewing gum in an amount from about 0.1% to about 10.0% and preferably from about 0.5% to about 3% of the gum. Flavoring agents may comprise essential oils, synthetic flavors, or mixtures thereof, including but not limited to, oils derived from plants and fruits such as citrus oils, fruit essences, peppermint oil, spearmint oil, clove oil, oil of wintergreen, anise and the like. Artificial flavoring components are also contemplated. Those skilled in the art will recognize that natural and artificial flavoring agents may be combined in any sensorially acceptable blend. All such flavors and flavor blends are contemplated by the present invention.

In general, chewing gum is manufactured by sequentially adding the various chewing gum ingredients to any commercially available mixer known in the art. After the ingredients have been thoroughly mixed, the gum mass is discharged from the mixer and shaped into the desired forms such as by rolling into sheets and cutting into sticks or extruding into chunks. Generally, the ingredients are mixed by first melting the gum base and adding it to the running mixer. The base may also be melted into the mixer itself. Color may be added at this time. A softener such as glycerin may then be added next along with the syrup and a portion of the bulking agent. Further portions of the bulking agents may then be added to the mixer. The free water of the present invention is preferably added after essentially all of the bulk sweetener has been incorporated into the molten gum base, as described above. Preferably, the flavor ingredients are added to the gum mixture near the end of the mixing process. The entire mixing procedure takes from about 5 minutes to 15 minutes, however, longer mixing times may be required. Those persons skilled in the art will recognize that many variations of the above-described procedure may be followed.

## EXAMPLE 1

Four laboratory-scale batches of sugarless chewing gum were prepared according to the formulae shown below in Table 1. The gum formulation designated "A" is an anhydrous formulation, whereas the other three formulations comprise three different sources of water: "B" is an experimental formulation comprising distilled water; "C" comprises a 70% sorbitol solution; and "D" comprises the hydrogenated starch hydrolysate, Lycasin®. The added water content of all three products is the same, 1.0%.

Table 1

| FORMULATION | | | | |
|---|---|---|---|---|
| Ingredient | A | B | C | D |
| Sorbitol | 45.88 | 44.88 | 42.55 | 41.88 |
| Non-tack Gum Base | 24.92 | 24.92 | 24.92 | 24.92 |
| Mannitol | 14.00 | 14.00 | 14.00 | 14.00 |
| Glycerin | 13.00 | 13.00 | 13.00 | 13.00 |
| Peppermint Oil | 1.70 | 1.70 | 1.70 | 1.70 |
| Aspartame | 0.50 | 0.50 | 0.50 | 0.50 |
| Sorbitol Solution (70%) | ----- | ----- | 3.33 | ----- |
| Lycasin® | ----- | ----- | ----- | 4.00 |
| Distilled Water | ----- | 1.00 | ----- | ----- |
| | 100% | 100% | 100% | 100% |

All four gum preparations were mixed, rolled, and cut into sticks. The four gum products were then aged for 10 days at room conditions. Next, the gum products were stored according to the following test conditions: (1) Tappi condition which is 70°F / 50% Relative Humidity (both exposed and in sealed pouches); and (2) 85°F / 70% Relative Humidity (both exposed and in sealed pouches).

After 10 days at room conditions, the four gum products were visually observed and inspected. Gum B (comprising distilled water) was determined to have the best physical characteristics and appearance after storage, it was only very slightly dry and was moderately to very flexible. Gum D (comprising Lycasin®) was slightly drier than Gum B. Gum A (anhydrous) was found to have moderate flexibility and was slightly dry. Gum C (comprising 70% sorbitol solution) exhibited the worst physical characteristics, being more dry and brittle than Gum A.

The four gum products stored at 70°F / 50% Relative Humidity (exposed) were observed and inspected after 16 days. It was found that overall there was little difference between the four gums. Gums A and D were very flexible while Gums B and C showed slight cracking.

The gum products stored under the most extreme conditions, 85°F / 70% Relative Humidity (exposed), were examined after 6 days. There was no difference among the four gums; all were in a semi-liquid state.

**EXAMPLE 2**

Gum products A, B, C, and D, described in Example 1, were tested to determine aspartame stability in the gum. Specifically, the gum products which had been stored in sealed pouches were tested for the amount of aspartame present in the gum. The figures shown below in Table 2 indicate the percentage of original aspartame retained in the gum after 78 days of storage.

Table 2

| Storage Conditions | | |
|---|---|---|
| Gum Product | 70°F/50% Rel. Hum. | 85°F/70% Rel. Hum. |
| A (anhydrous) | 98% | 91% |
| B (distilled water) | 89% | 71% |
| C (70% sorbitol soln) | 85% | 54% |
| D (Lycasin®) | 93% | 82% |

**EXAMPLE 3**

The four gum products described in Example 1 were evaluated by sensory testing. Gums A, B, C, and D, after storage in sealed pouches for 142 days at 85°F / 70% Relative Humidity, were chewed by a panel of expert gum chewers for three minutes each. The panelists reported the following sensory data:

A - (Anhydrous):

- Very crumbly and waxy initial bite
- Quick hydration, bulky, soft, rough surface in initial chew
- Very waxy, firm, non-cohesive intermediate chew
- No flavor comments.

B - (Distilled Water):

- Drier, less crumbly initial bite
- Initial chew similar to A
- Less waxy, some cohesiveness, more typical intermediate chew
- Stronger mint flavor.

C - (70% Sorbitol Solution)

- Less crumbly, softer than A (initial bite)
- Less bulky initial chew
- Rough, dry, chalky, intermediate chew
- Least sweet.

D - (Lycasin®)

- Very crumbly, rough surface in initial bite
- Slightly cohesive initial chew
- Intermediate chew similar to B
- Oxidized mint flavor.

Overall, Gum B containing free water had the most favorable comments, followed by Gums C and D (roughly equal) with Gum A slightly worse.

In summary, a relatively inexpensive method has been described for preparing a quality sugarless chewing gum using free water as an ingredient in the gum formulation. Although specific embodiments and examples have been described herein, it should be born in mind that these have been provided by way of explanation and illustration and that the present invention is not limited thereby. Modifications which are within the ordinary skill in the art to make are considered to lie within the scope of the invention as defined by the following claims, including all equivalents.

**Claims**

1. A method of preparing a sugarless chewing gum using free water, comprising the following steps:
   providing gum ingredients, comprising molten gum base, softener, and bulk sweetener ingredients;
   providing free water; and
   mixing the free water with the gum ingredients so that the free water comprises about 0.2% to about 3.0% by weight of the chewing gum.

2. A method as claimed in claim 1 wherein the free water comprises about 0.4% to about 1.5% by weight of the chewing gum.

3. A method as claimed in claim 2 wherein the free water comprises about 0.5% to about 1.0% by weight of the chewing gum.

4. A method as claimed in any one of the preceding claims wherein the free water is mixed with the gum ingredients after essentially all of the bulk sweetener has been added to the molten gum base.

5. A method as claimed in any one of claims 1 to 3 wherein the free water and softener are mixed with the molten gum base before the bulk sweetener is added to the gum ingredients.

6. A method as claimed in any one of the preceding claims wherein the free water is distilled water.

7.  A sugarless chewing gum composition comprising free water, wherein said free water is about 0.2% to about 3.0% by weight of the gum composition.

8.  A gum composition as claimed in claim 7 wherein said free water is about 0.4% to about 1.5% by weight of the composition.

9.  A gum composition as claimed in claim 8 wherein said free water is about 0.5% to about 1.0% by weight of the composition.

10. A sugarless chewing gum comprising between about 5% and about 95% by weight of a gum base, between about 0.1% and about 15% by weight of a softener; from about 0.1% to about 10% by weight of a flavouring agent and a sugarless sweetener characterised in that the gum also comprises from about 0.2% to about 3.0% by weight of free water.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 902 482 (PATEL ET AL.)<br>* column 5, line 40 - line 53 * | 1 | A23G3/30 |
| A | US-A-3 857 964 (YOLLES)<br>* example 5 * | 1-5,7-10 | |
| A | DE-A-3 010 836 (BARNÄNGEN DEUTSCHLAND GMBH)<br>* claims * | 1 | |
| | | | **TECHNICAL FIELDS SEARCHED (Int. Cl.5)**<br><br>A23G |

The present search report has been drawn up for all claims

| Place of search | Date of completion of the search | Examiner |
|---|---|---|
| THE HAGUE | 12 JUNE 1992 | LEPRETRE F.G.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)